# EUROPÄISCHE PATENTSCHRIFT

(11) **EP 0 378 287 B1**
(45) Veröffentlichungstag und Bekanntmachung des Hinweises auf die Patenterteilung: **19.06.1996**
(21) Anmeldenummer: 90250008.1
(22) Anmeldetag: 08.01.1990
(51) Int. Cl.: G01N 29/04

(54) **Verfahren zur Erfassung von Ungänzen an langgestreckten Werkstücken**
Process for detecting flaws in oblong work pieces
Procédé pour détecter des défauts dans des pièces oblongues

(30) Priorität: 13.01.1989 DE 3901238; 22.12.1989 DE 3943226
(43) Veröffentlichungstag der Anmeldung: 18.07.1990
(73) Patentinhaber: MANNESMANN Aktiengesellschaft, D-40027 Düsseldorf (DE)
(72) Erfinder: Schlawne, Friedhelm, Dr. rer. nat., D-5014 Kerben 3 (DE)
(74) Vertreter: Meissner, Peter E., Dipl.-Ing.

(56) Entgegenhaltungen:
- DE-A- 3 622 500
- US-A- 4 092 868
- PATENT ABSTRACTS OF JAPAN; unexamined applications, P Sektion, Band 8, Nr. 31, 9. February 1984 THE PATENT OFFICE JAPANESE GOVERNMENT, Seite 129 P 253

## Beschreibung

Die Erfindung betrifft ein Verfahren zur Erfassung von Ungänzen an Rohren und Stangen gemäß dem Gattungsbegriff des Hauptanspruches.

Aus der DE-OS 26 05 405 ist ein Verfahren zur Ultraschallprüfung an Rohren zur Erfassung von unterschiedlich liegenden Fehlern bekannt, bei dem mehrfach um den Rohrumfang laufende Lambwellen erzeugt werden und die Schwächung der umlaufenden Wellen bewertet wird. Dabei ist weder eine Rotation des Rohres noch der Wandler um das Rohr erforderlich, was bei vielen heute üblichen Verfahren notwendig ist. Mit dieser Anordnung lassen sich Fehler nahezu beliebiger Orientierung nachweisen. Da es sich um ein integrales Verfahren handelt, ist jedoch die Fehlernachweisempfindlichkeit im wesentlichen durch die Oberflächenbeschaffenheit des Prüflings bestimmt. Bei längsorientierten Fehlern kommt es zu Reflexionen an den Fehlern und die reflektierten Wellenimpulse interferieren möglicherweise mit den umlaufenden Wellen, so daß diese Fehler nicht sicher erkannt werden. Darüber hinaus ist der ungestörte Nachweis des an einem Fehler reflektierten Signales wünschenswert, da ein Impuls-Reflexions-Verfahren empfindlicher ist als ein (integrales) Durchschallungsverfahren.

Ein derartiges Impuls-Reflexions-Verfahren unter Einsatz von elektrodynamisch angeregten Oberflächenwellen, das mit einem Durchschallungsverfahren kombiniert werden kann, ist aus der DE-OS 32 18 453 zur Prüfung der Laufflächen von Eisenbahnrädern bekannt. Dort finden sowohl bi- als auch unidirektional wirkende Wandler Verwendung. Bei beidseitig wirkenden Wandlern ist eine sichere Trennung der Reflexionsanzeigen von den Anzeigen der primär umlaufenden Wellen nicht ohne weiteres möglich, was insbesondere für langgestreckte Werkstücke kleinen Durchmessers gilt. Darüber hinaus besteht z. B. bei Prüfung von dünnwandigen Rohren mit Plattenwellen die Gefahr, Fremdmoden anzuregen, die ebenfalls mehrfach um den Prüfling herumlaufen, die eine andere Gruppengeschwindigkeit als der Prüfmode aufweisen und deren Anzeigen von Reflexionsanzeigen nicht zu unterscheiden sind. Der Einsatz von unidirektional wirkenden Wandlern bietet zwar die Möglichkeit, die Anzeigen von primär umlaufenden Wellen zu unterdrücken und nur reflektierte Impulse zu bewerten; diese Wandler erfordern jedoch zeitlich aufeinanderfolgende Prüfschüsse in beide Umfangsrichtungen und ergeben somit eine langsamere Prüfgeschwindigkeit. Darüber hinaus ist der elektronische Aufwand und der Einstellungsaufwand einer derartigen Prüfanlage, die mit unidirektionalen Wandlern arbeitet, entsprechend groß.

Ein Wandler zum Prüfen mit umlaufenden Wellen, der die destruktive Interferenz am Ort des Empfängers ausnutzt, ist aus Patent Abstracts of Japan; P 253; 09.02.1984; Vol. 8; No. 31 bekannt. Eine derartige Anordnung läßt sich allerdings für die Prüfung der Außenoberfläche von Rohren und Stangen nur sehr schlecht realisieren, da di Einhaltung der destruktiven Interferenz in einer 180 Grad-Anordnung unter den betrieblichen Randbedingungen eines Herstellerwerkes kaum möglich ist.

Aus der DE-OS 36 22 500 ist ein Verfahren bekannt, bei dem zur gezielten Messung der Amplituden tangential umlaufender Wellenimpulse die Empfangssignale mit Burstsignalen derselben Frequenz, geeigneter Zeitdauer und Startverzögerung synchronisiert werden. Voraussetzung für das vorgeschlagene Verfahren ist aber, daß der genaue Ort der Anzeigen der primär umlaufenden Wellen durch die Kenntnis der geometrischen Anordnung von Sender und Empfänger und der Schallgeschwindigkeit der umlaufenden Wellenimpulse bekannt ist.
Aus diesem Grunde ist das bereits bekannte Verfahren nicht für das Erkennen von Reflexionsanzeigen geeignet, da sich der Fehler bzw. die Ungänze im Werkstück irgendwo auf dem Umfang des Prüflings befinden kann.

Aufgabe der Erfindung ist es, ein Verfahren zur Erfassung von Ungänzen an Rohren und Stangen anzugeben, mit dem die geschilderten Schwierigkeiten vermieden und Ungänzen, insbesondere längsorientierte mit einer hohen Genauigkeit bei hoher Prüfgeschwindigkeit detektiert werden können.

Diese Aufgabe wird bei einem Verfahren der eingangs angeführten Gattung erfindungsgemäß durch die im kennzeichnenden Teil des Hauptanspruches angegebenen Maßnahmen gelöst. Weitere Ausgestaltungen des Verfahrens sind in den Ansprüchen 2 und 3 aufgeführt.

Die bereits erwähnten Schwierigkeiten werden durch das erfindungsgemäße Verfahren vermieden. Wenn ein Wandler in beide Umfangsrichtungen des Prüflings gleichzeitig einen Wellenimpuls abstrahlt, so treffen sich diese Wellenzüge an zwei Punkten des Umfangs (mehrfach) wieder. Am Sendewandler selbst und in der auf dem Umfang genau gegenüberliegenden um 180° versetzt angeordneten Position. Wird der Empfangswandler genau dort positioniert, wo die beiden Wellenzüge destruktiv interferieren, so mißt der Empfänger bei einem fehlerfreien Prüfling nichts.

Bei Anwesenheit einer längsorientierten Ungänze auf dem Umfang des Prüflings erfolgt nun jeweils eine Reflexion eines Teiles der umlaufenden Wellen und führt zu einer Folge von Empfangssignalen. Ebenso erfolgen Empfangssignale, falls eine Ungänze zu einer unterschiedlichen Schwächung der beiden in beide Umfangsrichtungen laufenden Wellenimpulse führt, d. h. falls die Ungänze die in entgegengesetzter Richtung laufenden Impulse unterschiedlich reflektiert.

Besonders vorteilhaft ist bei dem hier beschriebenen Verfahren, daß jede Ungänze mehrfach passiert wird und es bei jedem Umlauf erneut zu einer Reflexion an einer längsorientierten Ungänze kommt, wobei reflektierte Signale mit bereits bei dem vorausgegangenen Umlauf reflektierten Wellen konstruktiv interferieren, so daß sich in Abhängigkeit von der Dämpfung der umlaufenden Wellen und dem Prüflingsdurchmesser die Signalfolge für einen Prüfschuß aufschaukeln kann.

Bedingt durch den mehrfachen Umlauf und durch mehrfach Reflexion werden bei Anwesenheit einer Fehlstelle bei jedem Prüftakt viele Signale gemessen. Um nicht nur eine Anzeige zu bewerten und um ein gutes Signal-Rauschverhältnis zu erreichen wird erfindungsgemäß ein Burstsignal erzeugt, dessen Periode kleiner als ein Viertel der Umlaufzeit der ungestört umlaufenden Wellen ist. Dabei wird für jeden Takt der Sender, der den Sendewandler betreibt und die Signalquelle, die das Burstsignal erzeugt, vom gleichen Taktimpuls angesteuert. Besonders vorteilhaft ist die Verwendung eines Burstsignals mit sehr großem Tastverhältnis. Werden das Analogsignal und dieses Burstsignal einem Peak-Detektor zugeführt, so ermittelt dieser in jedem Zeitfenster einen Maximalwert, der solange am Ausgang des Peak-Detektors festgehalten wird, bis im nächsten Zeitfenster ein neuer Maximalwert ermittelt ist. Bedingt durch die erfindungsgemäße Wahl der Periode des Burstsignals ist sichergestellt, daß sowohl die Reflexionssignale erfaßt werden können als auch eine Messung der Nullinie erfolgt, da einzelne Zeitfenster zwischen den Reflexionssignalen angeordnet sind.

Die Messung der Nullinie ist bei der Verwendung elektrodynamischer Wandler sehr wünschenswert, da nur so eventuell vorhandenes Rauschen erkannt werden kann und eine Bewertung der die Nullinie Ubersteigenden Anzeigen möglich ist. Durch die erfindungsgemäße Wahl der Länge des Burstsignals werden viele Reflexionsanzeigen ermittelt. so daß eine geeignete Integration erfolgen kann. Das Vorgehen bietet gegenüber einer vollständigen Digitalisierung des analogen Empfangsslgnals mit hoher Abtastrate den Vorteil, daß die Information hardwaremäßig geeignet reduziert wird und somit in den Rechner nur größenordnungsmäßig 50 bis 100 Werte eingelesen und dort verarbeitet werden müssen. Dieses Vorgehen erlaubt somit eine sehr schnelle Auswertung der Empfangssignale, so daß die Taktfolge im wesentlichen durch das Abklingen des umlaufenden Schalls und nicht durch die Dauer der Auswertung bestimmt wird.

Bei ungänzen, die exakt unter dem Sendewandler oder genau auf der gegenüberliegenden Seite liegen, kann es unter Umständen zu Auslöschungen der in beiden Richtungen laufenden Reflexionssignale am Ort des Empfängers kommen, so daß vorgeschlagen wird, alternierend im Prüftakt an zwei in Umfangsrichtung getrennt liegenden Orten in beide Umfangsrichtungen laufende Wellenimpulse anzuregen, wobei der Ort des Empfanges für die reflektierten Impulse verschieden ist von dem der gedämpften Impulse und die jeweilige Folge der Empfangssignale getrennt bewertet wird. Mit diesem Verfahren werden durch Bewertung der Dämpfung der Wellen insbesondere Ungänzen mit unterschiedlicher Orientierung bezüglich der Achse des Prüflings nachgewiesen und es dient gleichzeitig als Ankoppelkontrolle. Dabei bleibt der empfindliche Längsfehlernachweis gemäß dem Verfahren des Hauptanspruches erhalten.

Bei Wandlem, bei denen die Sende- und Empfangswicklungen des Spulensystems ineinander verschachtelt auf den gleichen Spulenträger so gewickelt sind, daß die Sende- und Empfangswicklung um ein Viertel der wellenlänge der geführten Wellen gegeneinander verschoben sind, weisen dann die in beide Umfangsrichtungen laufenden Wellenzüge am Ort des Empfangswandlers entgegengesetzte Phasenlage auf und interferieren destruktiv.

Für das kombinierte Verfahren werden in einer Umfangsebene zwei Uber den Umfang des Prüflings versetzt liegende Wandler feststehend angeordnet und die Folge der Empfangssignale beider Wandler auf eine Auswerteeinheit gegeben.

In der Zeichnung wird anhand zweier Ausführungsbeispiele das erfindungsgemäße Verfahren näher erläutert.

Es zeigen:
- Figur 1: eine Prinzipskizze zur Ausführung des erfindungsgemäßen Verfahrens
- Figur 2: der prinzipielle Aufbau des erfindungsgemäßen Wandlers
- Figur 3a: das analoge Empfangssignal mit einer Folge von Reflexionsanzeigen
- Figur 3b: das erfindungsgemäße Burstsignal
- Figur 3c: das Ausgangssignal des Peak-Detektors
- Figur 4: die prinzipielle Anordnung des erfindungsgemäßen kombinierten Verfahrens.

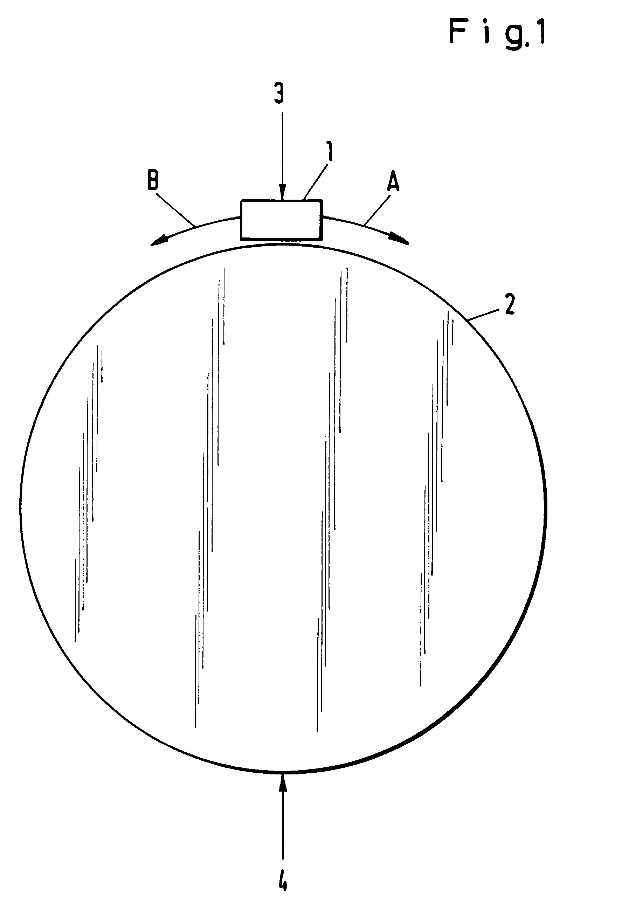

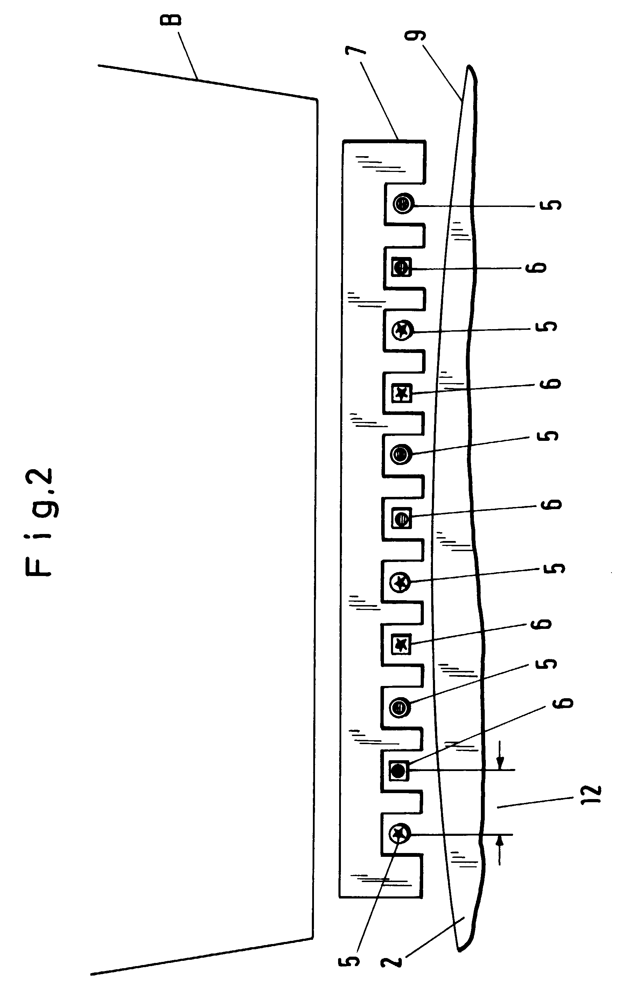

In Figur 1 ist der prinzipielle Aufbau zur Durchführung des erfindungsgemäßen Verfahrens dargestellt. Ein in einem bestimmten Abstand zu einem Prüfling 2 angeordneter Wandler 1 strahlt gleichzeitig in beide Umfangsrichtungen des Prüflings 2 einen Wellenimpuls A,B ab. In dieser Figur 1 ist der im Uhrzeigersinn abgestrahlte Wellenimpuls mit Index A und der im Gegenuhrzeigersinn mit Index B bezeichnet. Beide Wellenimpulse A, B laufen in Umfangsrichtung mehrfach um und treffen sich an zwei definierten Punkten des Umfanges wieder: einmal am Wandler 1 selbst, hier mit Position 3 bezeichnet und auf der genau gegenüberliegenden um 180° versetzt liegenden Seite, hier mit Position 4 bezeichnet. Das erfindungsgemäße Verfahren ist nun dadurch gekennzeichnet, daß der Empfangswandler genau dort positioniert wird, wo die beiden ungestört laufenden Wellenimpulse A,B destruktiv interferieren. Zur Durchführung des Verfahrens sind zwei Anordnungen möglich, einmal in der Weise, daß der Wandler 1 nur Sendewandler ist und in Position 4 der hier nicht dargestellte Empfangswandler angeordnet wird. Dies wird man nur in sehr seltenen Fällen anwenden, da die genaue Einjustierung des Empfangswandlers schwierig ist. Die andere Möglichkeit besteht darin, daß in dem Wandler 1 Sende- und Empfangsspulen 5,6 (Figur 2) ineinander verschachtelt und so gewickelt sind, daß sie um ein Viertel der Wellenlänge der geführten Wellen gegeneinander verschoben sind.

In Figur 2 sind die Einzelheiten des erfindungsgemäßen Wandlers dargestellt. Zwischen der Oberfläche 9 des Prüflings 2 und dem Magneten 8 bzw. dem Magnetsystem ist der Spulenträger 7 angeordnet. Auf diesem Spulenträger 7 sind die Sende5- und Empfangswicklungen 6 ineinander verschachtelt und so gewickelt, daß der Abstand 12 zwischen zwei benachbart liegenden Wicklungen ein Viertel der Wellenlänge beträgt.

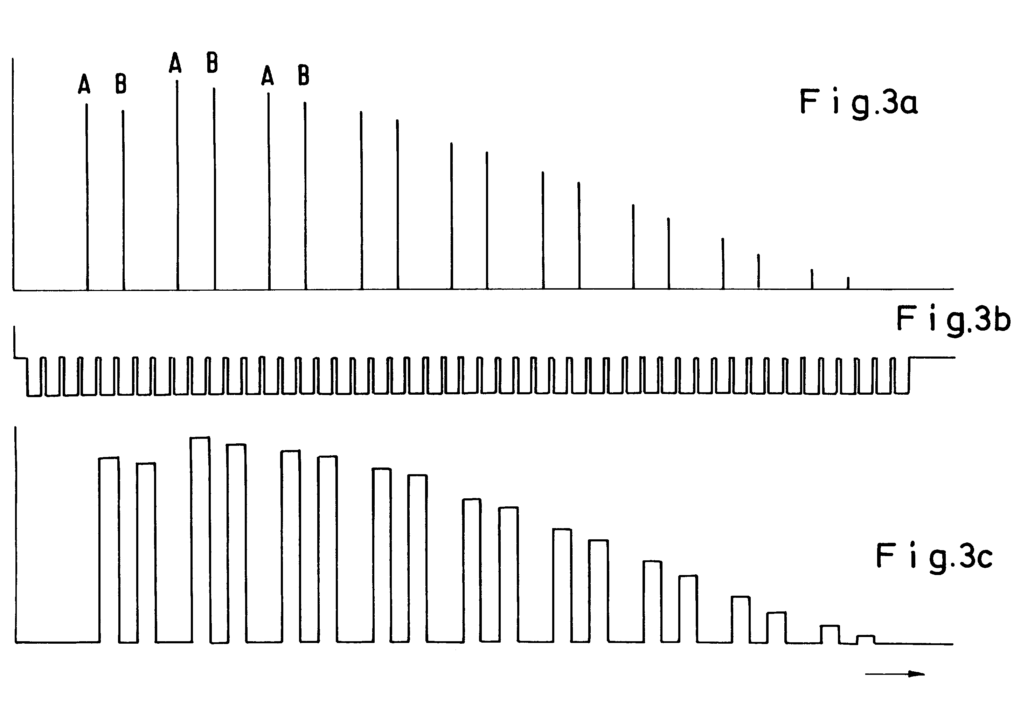

Figur 3a zeigt ein schematisches Bild der Amplituden einer Folge von reflektierten Signalen für einen Prüfschuß. In diesem dargestellten Beispiel liegt die Ungänze, an der die beiden Wellenzüge A,B reflektieren, nahezu auf der dem Sender gegenüberliegenden Seite, da die Amplitudenhöhen sich nur gering unterscheiden. Sehr gut ist an diesem schematischen Bild der Aufschaukeleffekt zu erkennen, der immer dann entsteht, wenn das reflektierte Signal der beiden Wellenzüge A,B mit bereits bei dem voraufgegangenen Umlauf reflektierten Wellen konstruktiv interferiert. Dadurch wird in Abhängigkeit von der Zeit bzw. von der Anzahl der Umläufe der Dämpfungseffekt bei den ersten Umläufen zuerst überkompensiert und erst nach Überschreiten des Peak überwiegt dann der dämpfende Einfluß bei jedem weiteren Umlauf.

In dem Teilbild 3b ist das erfindungsgemäße zum Analogsignal gehörende Burstsignal dargestellt. Wesentlich dabei ist das sehr stark unterschiedliche Tastverhältnis des Burstsignals, das signifikant vom üblichen 1:1 Verhältnis abweicht. Mit Tastverhältnis ist hier gemeint das Verhältnis des Zeitintervalls in dem der Peak-Detektor aktiv ist zum Zeitintervall in dem der Peak-Detektor nicht aktiv ist. Dieses Verhältnis soll erfindungsgemäß möglichst groß sein. Analogsignal und Burstsignal werden einem Peak-Detektor zugeführt, dessen Ausgangssignal in Abbildung 3c dargestellt ist.

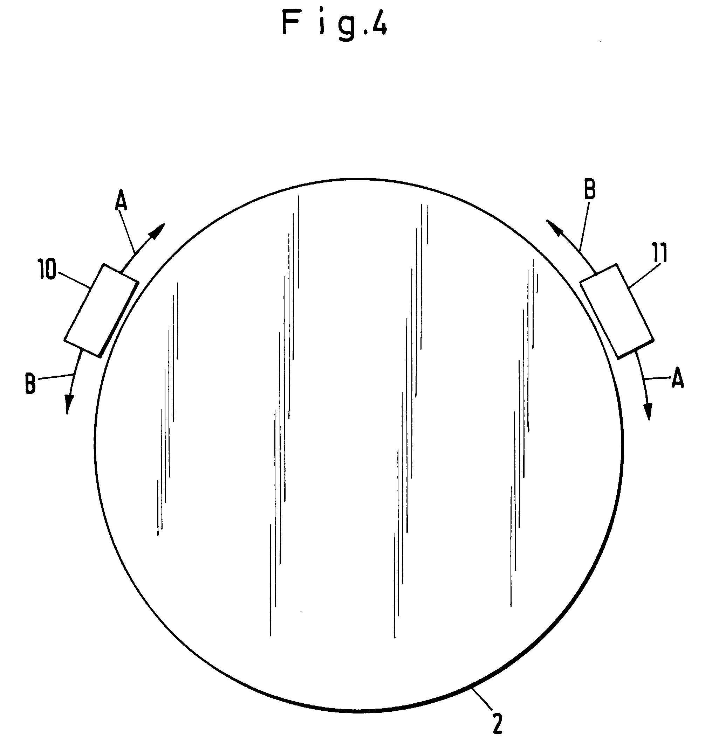

Figur 4 zeigt das erfindungsgemäße kombinierte Verfahren, bei dem das Impuls-Reflexions-Verfahren und das Durchschallungsverfahren gleichzeitig zur Anwendung kommen. Dazu werden auf dem Umfang des Prüflings 2 zwei voneinander getrennte elektrodynamische Wandler 10,11 angeordnet. Beide Wandler 10,11 weisen die um ein Viertel der Wellenlänge versetzt angeordneten Sende5- und Empfangswicklungen 6 auf (siehe Figur 2). Die Sendespulen der beiden Wandler 10,11 werden alternierend betrieben. Im ersten Takt sendet die Sendespule des links angeordneten Wandlers 10 und die Empfangsspule des rechts angeordneten Wandlers 11 mißt die Amplituden der umlaufenden Wellen und führt die Folge von Empfangssignalen einer hier nicht dargestellten Auswerteeinheit zu. Gleichzeitig mißt die Empfangsspule des links angeordneten Wandlers 10 Signale, d. h. Reflektionssignale bzw. Signale, die durch die ungleichmäßige Schwächung der in beide Richtungen umlaufenden Wellen verursacht werden und führt diese ebenfalls der Auswerteeinheit zu. Die in der Empfangsspule des rechts angeordneten Wandlers 11 gemessenen Signale, z. B. die Summe der Amplituden der ersten beiden Peaks, können zusätzlich zur groben Ankoppelkontrolle von der Empfangsspule des links angeordneten Wandlers 10 genutzt werden, da diese in die Sendespule des Wandlers 10 integriert ist. Für den zweiten Takt erfolgt ein Vertauschen der Anregungen bzw. des Empfangs der beiden Wandler 10,11.

## Patentansprüche

1. Verfahren zur Erfassung von Ungänzen an Rohren und Stangen, indem der Prüfling in axialer Richtung ohne Drehung an mindestens einem feststehenden elektrodynamischen Wandler vorbeigeführt wird und im Prüfling tangential umlaufende Wellenimpulse, die sich in beide Umfangsrichtungen ausbreiten, im Takt erzeugt und empfangen werden, wobei für jeden Takt das Empfangssignal und ein ein großes Tastverhältnis aufweisendes Burstsignal, dessen Länge der Abklingzeit der ungestört laufenden Wellenimpulse bei fehlerfreiem werkstück entspricht, einem Peak-Detektor zugeführt werden und das Ausgangssignal des Peak-Detektors digitalisiert an einen Rechner übertragen wird,
**dadurch gekennzeichnet**,
daß die Periode des Burstsignales kleiner als ein viertel der Umlaufzeit der Wellenimpulse um den Prüfling gewählt ist und daß alternierend im Prüftakt an zwei in Umfangsrichtung getrennt liegenden Orten in beide Umfanqsrichtungen laufende Wellenimpulse angeregt werden und wobei die beiden ungestört laufenden Wellenimpulse am Ort des jeweiligen Empfängers destruktiv interferieren und der Ort des Empfanges für die reflektierten Impulse verschieden ist von dem der gedämpften Impulse und die jeweilige Folge von Empfangssignalen getrennt bewertet werden.

2. Verfahren nach Anspruch 1,
dadurch gekennzeichnet,
daß bei einem Wandler, dessen Sende- und Empfangswandlerspulen auf einem Spulenträger und um ein Viertel der Wellenlänge gegeneinander versetzt gewickelt sind, im Falle mehrerer Sendespulen alle Sendespulen im gleichen Takt angesteuert werden.

3. Verfahren nach Anspruch 2,
dadurch gekennzeichnet,
daß in einer Umfangsebene zwei über den Umfang des Prüflings versetzt liegende Wandler feststehend angeordnet sind und die Folge von Empfangssignalen beider Wandler auf eine Auswerteeinheit gegeben werden.

## Claims

1. A method for detecting flaws on pipes and rods, in which the test piece is moved in the axial direction without rotation past at least one stationary electrodynamic transducer and tangentially circulating wave pulses which spread in both peripheral directions are generated and received in cycle in the test piece, wherein for each cycle the incoming signal and a burst signal having a large pulse duty factor, the length of which signal corresponds to the decay time of the wave pulses running undisturbed for fault-free workpieces, is supplied to a peak detector and the output signal of the peak detector is transmitted in digitised form to a computer,
characterised in that
the period of the burst signal is less than one quarter of the circulation time of the wave pulses around the test piece and that wave pulses running in both peripheral directions are excited alternately in the test cycle at two locations separate from each other in the peripheral direction and wherein the two wave pulses running undisturbed interfere destructively at the location of the respective receiver and the location of the reception for the reflected pulses is different from that of the damped pulses and the respective sequence of incoming signals is evaluated separately.

2. A method according to Claim 1, characterised in that in a transducer the transmission and reception transducer coils of which are wound on a coil holder and offset relative to each other by one quarter of the wavelength, if there are a plurality of transmission coils all the transmission coils are driven in the same cycle.

3. A method according to Claim 2, characterised in that in a peripheral plane two transducers offset across the periphery of the test piece are arranged in stationary manner and the sequence of incoming signals of both transducers is passed to an evaluation unit.

## Revendications

1. Procédé pour détecter des imperfections de tubes et de barres, pour lequel l'échantillon est transporté en direction axiale, sans rotation, devant au moins un transducteur électrodynamique fixe, et des impulsions ondulatoires tournant tangentiellement dans l'échantillon et s'étendant dans les deux directions périphériques sont engendrées et détectées en cadence, pour chaque cadence le signal de détection et un signal continu présentant un taux d'impulsion élevé, dont la longueur correspond à la durée de retour à zéro des impulsions ondulatoires s'étendant sans être perturbées, pour une pièce sans imperfection, sont adressés à un détecteur de pic, et le signal de sortie du détecteur de pic est transmis de façon numérisée à un calculateur,
caractérisé en ce que la période du signal continu est choisie inférieure au quart de la durée de parcours des impulsions ondulatoires autour de l'échantillon, et en ce que de façon alternative, à la cadence d'analyse, à deux endroits séparés en direction périphérique, des impulsions ondulatoires s'étendant dans les deux directions périphériques sont excitées, et les deux impulsions ondulatoires qui s'étendent sans être perturbées interférant de façon destructive à l'endroit du détecteur correspondant, et l'endroit du détecteur étant différent pour les impulsions réfléchies de celui des impulsions amorties, et la suite correspondante de signaux de réception étant évaluée de façon séparée.

2. Procédé selon la revendication 1,
caractérisé en ce que pour un transducteur, dont les bobines transductrices d'émission et de réception sont enroulées sur un support de bobines, en étant décalées réciproquement d'un quart de longueur d'ondes, toutes les bobines d'émission sont commandées à la même cadence dans le cas de plusieurs bobines d'émission.

3. Procédé selon la revendication 2,
caractérisé en ce que, dans un plan périphérique, sont fixés deux transducteurs situés de façon décalée autour de la périphérie de l'échantillon, et la suite de signaux de réception des deux transducteurs est transmise à une unité d'évaluation.
